# EUROPEAN PATENT SPECIFICATION

(11) **EP 4 206 581 B1**
(45) Date of publication and mention of the grant of the patent: **11.09.2024**
(21) Application number: 22210208.9
(22) Date of filing: 29.11.2022
(51) Int. Cl.: F25D 23/00

(54) **MOUNTING METHOD FOR A REFRIGERATOR EVAPORATOR**
MONTAGEVERFAHREN FÜR EINEN KÜHLSCHRANKVERDAMPFER
PROCÉDÉ DE MONTAGE POUR UN ÉVAPORATEUR DE RÉFRIGÉRATEUR

(30) Priority: 30.12.2021 TR 202121803
(43) Date of publication of application: 05.07.2023
(73) Proprietor: Arçelik Anonim Sirketi, 34445 Istanbul (TR)
(72) Inventor: MUMINOGLU, Fatih, 34445 Istanbul (TR); YILMAZ, Ahmet Hamit, 34445 Istanbul (TR); OZSACMACI, Yigit, 34445 Istanbul (TR); KERIMOGLU, Vugar, 34445 Istanbul (TR); SEN, Hakan, 34445 Istanbul (TR)

(56) References cited:
- WO-A1-2019/020176
- K. SCHRICKER ET AL.: "Bonding mechanisms in laser-assisted joining of metal-polymer composites - ScienceDirect", 31 March 2020 (2020-03-31), XP093040584, Retrieved from the Internet <URL:https://www.sciencedirect.com/science/article/pii/S2666330920300066> [retrieved on 20230420]

## Description

The present invention relates to cooling systems developed to be used in refrigerators and cooling devices. The present invention particularly relates to the mounting of the metal parts of evaporators, which are generally positioned on the rear surfaces of the plastic cabinets of refrigerators and cooling devices.

The evaporator is a heat exchange member, which is one of the important components of refrigerators and similar cooling systems operating based on the same principles. The low-temperature condensed fluid is passed through the evaporator body to exchange heat with the ambient air, and the refrigeration effect is achieved by heating the gas. The cooling rate and the long-term durability of the evaporator is an important indicator of the efficiency level of the refrigerator or cooling device.

In the state of the art, the evaporator body is mounted to the body of the refrigerator or the cooling device generally by means of hot-melt adhesive; however, the strength and thermal conductivity of ordinary hot-melt adhesives are hardly sufficient to meet the general use requirements of cooling devices. The state of the art hot-melt adhesive technology has an unstable adhesive strength and is highly sensitive to temperature and humidity changes in the working environment. The post-process strength of the adhesive used to provide the connection during the adhesion varies, which creates an undesirable situation in terms of quality standards.

Moreover, chemical structure of the adhesives used in this technique may deteriorate depending on the ambient conditions such that the adhesive strength thereof decreases and quality problems may occur in the product. Due to the state of the art adhesion process, it is not possible to take the evaporators through the polyurethane into the fresh food compartment, and a plastic body material which is always present between the evaporator surface and the cooled environment causes an undesirable insulation.

The state of the art Patent Document No. CN105670533A discloses a hot-melt heat-conducting glue for refrigerator or freezer evaporator and preparation and application thereof The hot-melt heat-conducting glue contains halogenated butyl rubber, liquid butyl rubber, polyisobutene, tackifier, paraffin, white oil, coupling agent, heat conduction filler, antioxidant and antiager. The hot-melt heat-conducting glue is selected due to its heat conduction property, adhesive property, anti-aging property and anti-corrosion property.

The process is conducted with automatic equipment, and glue application and liner wrapping can be conducted synchronously, and production efficiency is improved greatly. Complete bubble-free attaching of an evaporator pipeline and a refrigerator or freezer liner shell is achieved.

K. SCHRICKER ET AL.: "Bonding mechanisms in laser-assisted joining of metal-polymer composites - ScienceDirect",, 1 March 2020 (2020-03-01), XP093040584,Retrieved from the Internet:URL:https://www.sciencedirect.com/science/article/pii/S2666330920300066, discloses a method for attaching a metal to polymer composites.

WO 2019/020176 A1 discloses another example of refrigerator in which the evaporator is glued onto the rear surface of the refrigerator.

The aim of the present invention is the realization of a method for mounting the metal parts of evaporators used in refrigerators to the body.

Another aim of the present invention is the realization of a method for mounting the metal parts of evaporators used in refrigerators to the body, wherein advantages in cost and durability are achieved by not using double-sided tapes.

Yet another aim of the present invention is the realization of a method for mounting the metal parts of evaporators used in refrigerators to the body, wherein performance losses due to aging are significantly avoided.

Another aim of the present invention is the realization of a method for mounting the metal parts of evaporators used in refrigerators to the body, which ensures that high-class energy level products can be reached with less consumption.

Yet another aim of the present invention is the realization of a method for mounting the metal parts of evaporators used in refrigerators to the body, wherein the use of an evaporator cover can be completely avoided.

The invention is defined by the method according to claim 1 and a refrigerator according to claim 7.

In the metal evaporator body mounting method of the present invention, a metal evaporator body is subjected to a hybrid welding process. In accordance with the steps of said mounting method, a metal evaporator body is first subjected to laser microstructuring. As a result of said microstructuring, micrometer-level cavities are provided on said body, and then the body is placed on the plastic part and subjected to a cohesive force. Following this process, the metal part is heated to a predetermined degree with a laser or another heat source and the surface of the plastic part is melted. By heat conduction, the melted plastic part is filled into the cavities of the microstructured body. As the temperature of the melted plastic filled into the cavities decreases and solidifies, the bonding is achieved.

The figures should not be interpreted as limiting the scope of protection defined in the claims, and should not be used simply to interpret the scope in the claims without referring to the technique in the description.

The method for mounting the metal part of an evaporator used in refrigerators to the body realized in order to attain the aim of the present invention is illustrated in the attached figures, where:

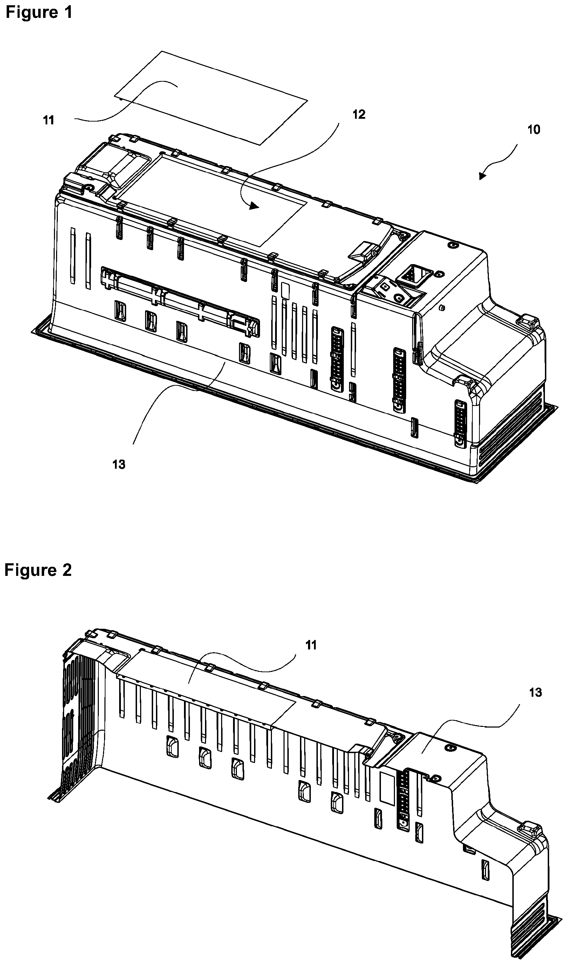

**Figure 1** - is the top perspective view of the refrigerator body and the evaporator part to be mounted by means of the method of the present invention.
**Figure 2** - is the perspective cross-sectional view of the evaporator part to be mounted by means of the method of the present invention, as placed on the refrigerator body.

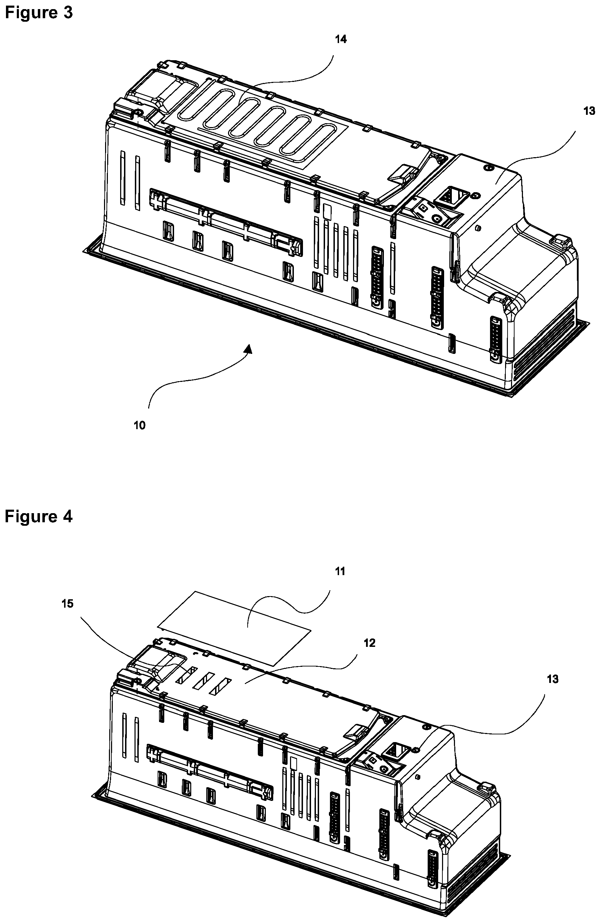

**Figure 3** - is the top perspective view of the resistance component of the evaporator part to be mounted by means of the method of the present invention, applying pressure on the refrigerator body in an embodiment of the present invention.
**Figure 4** - is the top perspective view of the thermoform with air ducts applied on the refrigerator body in an embodiment of the evaporator part to be mounted by means of the method of the present invention.

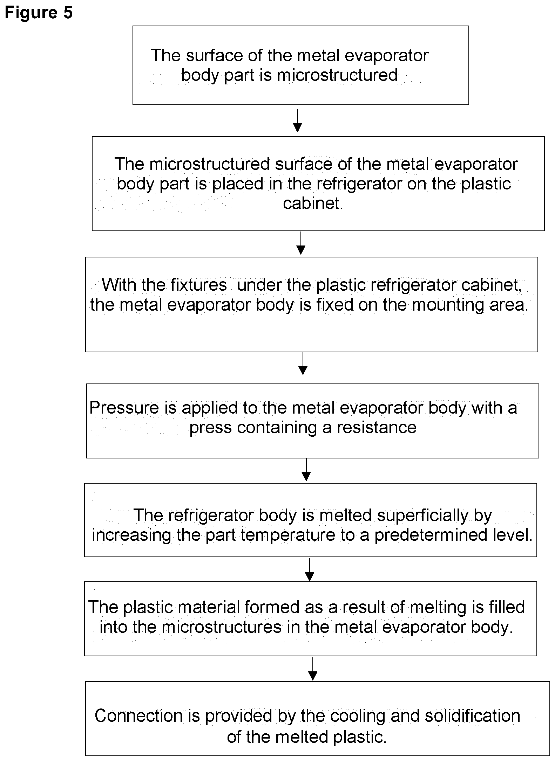

**Figure 5** - is the flow diagram in steps of the evaporator mounting method of the present invention in an embodiment of the present invention.

The elements illustrated in the figures are numbered as follows:
10. Device to which the evaporator is to be mounted
11. Evaporator body
12. Thermoform
13. Cooling system body
14. Resistance
15. Air duct

The present invention provides a superior solution to the state of the art applications of mounting metal evaporator parts, which are generally positioned on the rear surfaces of the plastic cabinets of refrigerators and cooling devices.

The metal evaporator body (11) mounting method of the present invention is advantageous in that the above-mentioned state of the art problems, the connection method and the materials used are improved and simplified. Thus, the technical benefits, which cannot be achieved with mounting with double-sided tape, mounting with hot-melt adhesive and mounting with wrapping tape, causing the above-mentioned state of the art problems, are obtained.

In an embodiment of the present invention, the evaporator is mounted to a device (10) to which the evaporator is to be mounted. Said mounting process is carried out by using the mounting method of the present invention.

In the metal evaporator body (11) mounting method of the present invention, a metal evaporator body (11) is subjected to a hybrid welding process. The steps of said mounting method are described below.

In an embodiment of the present invention, channels with a minimum depth of 10 micrometers and a maximum depth of 50 micrometers are opened on the surface of the metal evaporator body (11) part to be mounted at a desired location on the refrigerator or similar cooling system body (13), said surface facing said refrigerator or similar cooling system body (13).

In an embodiment of the present invention, said channels with a depth of 10 to 50 micrometers are opened by means of a fiber laser.

In an embodiment of the present invention, the fiber laser used for opening said channels with a depth of 10 to 50 micrometers is a fiber laser with a power of 200-400 W.

In an embodiment of the present invention, the metal evaporator body (11) part, whereon said channels with a depth of 10 to 50 micrometers are opened, is then placed on the plastic cabinet of the refrigerator or similar cooling system.

In an embodiment of the present invention, a thermoform (12) is provided on said plastic cabinet. Said thermoform (12) can be completely emptied in some embodiments, or air ducts (15) can be applied with trims.

In an embodiment of the present invention, the metal evaporator body (11) part, whereon said channels with a depth of 10 to 50 micrometers are opened, is then fixed to the cabinet by means of the fixture provided under the cabinet after the placement is completed.

In an embodiment of the present invention, a predetermined amount of pressing force is applied to the metal evaporator body (11) part, whereon said channels with a depth of 10 to 50 micrometers are opened, for a predetermined time (10 to 20 seconds) by means of a press containing a resistance (14), following the fixation process. In an explanation of the present invention, said pressing force is at least 500 newtons and at the most 3 kilo newtons.

In an embodiment of the present invention, while the compressive force is being applied by said resistance (14) to said metal evaporator body (11) part, the temperature of said part is increased up to a predetermined value. In an embodiment of the present invention, said predetermined temperature value is between 200-240 degrees Celsius.

In an embodiment of the present invention, while the compressive force is being applied by said resistance (14) to said metal evaporator body (11) part, the temperature of said part is increased up to a predetermined value, thus melting the surface of the plastic part to which the same is to be mounted.

In an embodiment of the present invention, melted plastic material is enabled to be filled from the surface of said plastic part into the channels formed on said metal evaporator body (11) part. A physical connection is provided by the solidification of the melted material.

Various embodiments of the present invention are particularly described. However, various embodiments other than those mentioned above are also possible.

## Claims

1. A method for mounting an evaporator, which is suitable to be used in a refrigerator and which has a metal part and a plastic surface, **comprising** the steps of:
- opening channels on the surface of the metal evaporator body (11) part by means of laser,
- placing the surface of the metal evaporator body (11) part, which has said channels opened by means of laser, on the plastic refrigerator cabinet,
- fixing the metal evaporator body (11) part on a mounting area with fixtures provided under the plastic refrigerator cabinet,
- applying pressure onto said metal evaporator body (11) part with a press comprising a resistance (14),
- ensuring the superficial melting of the plastic refrigerator body (13) by increasing the temperature of the part to a predetermined value,
- ensuring that the plastic material formed as a result of superficial melting is filled into the channels opened on the metal evaporator body (11) part, and
- forming a physical connection with the cooling system body (13) as the plastic filled into the channels by melting cools down and solidifies.

2. An evaporator mounting method as in Claim 1, **characterized in that** said channels opened by laser have a depth between 10 to 50 micrometers.

3. An evaporator mounting method as in any one of the above claims, **characterized in that** the pressure to be exerted on said metal evaporator body (11) part is applied for 10 to 20 seconds.

4. An evaporator mounting method as in any one of the above claims, **characterized in that** the pressure to be exerted on said metal evaporator body (11) part is between 500 to 3000 Newtons.

5. An evaporator mounting method as in any one of the above claims, **characterized in that** the predetermined temperature value to which the metal evaporator body (11) part is to be increased is in the range of 200 to 240 degrees Celsius.

6. An evaporator mounting method as in any one of the above claims, **characterized in that** the thermoform (12) applied in said mounting area has at least one air duct (15) structure.

7. A refrigerator which is manufactured by using the evaporator mounting method as in any one of the above claims.

## Patentansprüche

1. Ein Montageverfahren eines zur Verwendung in einem Kühlschrank geeigneten Verdampfers, der ein Metallteil und eine Kunststoffoberfläche aufweist, **umfasst** die Schritte:
- Öffnung von Kanälen auf der Oberfläche des metallischen Verdampferkörpers (11) mit Hilfe eines Lasers,
- Anbringen der Oberfläche des Metallteils des Verdampferkörpers (11), in dem die Kanäle mit Hilfe eines Lasers geöffnet wurden, auf dem Kunststoffkühlschrank,
- Befestigung des Verdampferkörpers (11) aus Metall auf einer Montagefläche mit Vorrichtungen, die unter dem Kunststoff-Kühlschrank vorgesehen sind,
- Ausüben von Druck auf das Metallteil des Verdampferkörpers (11) mit einer Presse, die einen Widerstand (14) aufweist,
- Sicherstellung des oberflächlichen Schmelzens des Kunststoffkühlkörpers (13) durch Erhöhung der Temperatur des Teils auf einen vorgegebenen Wert,
- Sicherstellen, dass das durch oberflächliches Schmelzen gebildete Kunststoffmaterial in die am Metallkörper (11) des Verdampfers geöffneten Kanäle gefüllt wird, und
- Bildung einer physischen Verbindung mit dem Körper des Kühlsystems (13), wenn der durch Schmelzen in die Kanäle gefüllte Kunststoff abkühlt und sich verfestigt.

2. Ein Verdampfer-Montageverfahren, wie in Anspruch 1 aufgeführt, **ist dadurch gekennzeichnet, dass** die durch Laser geöffneten Kanäle eine Tiefe zwischen 10 und 50 Mikrometern aufweisen.

3. Ein Verdampfer-Montageverfahren, wie in einem der vorherigen Ansprüchen aufgeführt, **ist dadurch gekennzeichnet, dass** der auf das Metallteil des Verdampferkörpers (11) auszuübende Druck 10 bis 20 Sekunden lang angewendet wird.

4. Ein Verdampfer-Montageverfahren, wie in einem der vorherigen Ansprüchen aufgeführt, **ist dadurch gekennzeichnet, dass** der auf das Metallteil des Verdampferkörpers (11) auszuübende Druck zwischen 500 und 3000 Newton liegt.

5. Ein Verdampfer-Montageverfahren, wie in einem der vorherigen Ansprüchen aufgeführt, **ist dadurch gekennzeichnet, dass** der vorgegebene Temperaturwert, auf den das Metallteil des Verdampferkörpers (11) erhöht werden soll, im Bereich von 200 bis 240 Grad Celsius liegt.

6. Ein Verdampfer-Montageverfahren, wie in einem der vorherigen Ansprüchen aufgeführt, **ist dadurch gekennzeichnet, dass** die im Montagebereich angebrachte Thermoform (12) mindestens eine Luftkanalstruktur (15) aufweist.

7. Ein Kühlschrank wird durch Anwendung des Verdampfer-Montageverfahrens einem der vorstehenden Ansprüche hergestellt.

## Revendications

1. Un procédé de montage d'un évaporateur, adapté à être utilisé dans un réfrigérateur et comportant une partie en métal et une surface en matière plastique, **comprenant** les étapes suivantes :
- ouvrir des canaux sur la surface de la partie en métal du corps de l'évaporateur (11) au moyen d'un laser,
- placer la surface de la partie en métal du corps de l'évaporateur (11), qui a lesdits canaux ouverts au moyen d'un laser, sur le caisson en plastique du réfrigérateur,
- fixer la partie en métal du corps de l'évaporateur (11) sur une zone de montage à l'aide de fixations prévues sous le caisson en plastique du réfrigérateur,
- appliquer une pression sur ladite partie en métal du corps de l'évaporateur (11) avec une presse comprenant une résistance (14),
- assurer la fusion superficielle du corps en plastique du réfrigérateur (13) en augmentant la température de la partie jusqu'à une valeur prédéterminée,
- s'assurer que la matière plastique formée à la suite de la fusion superficielle est remplie dans les canaux ouverts sur la partie en métal du corps de l'évaporateur (11), et
- former une connexion physique avec le corps du système de refroidissement (13) au fur et à mesure que la matière plastique remplie dans les canaux par fusion se refroidit et se solidifie.

2. Un procédé de montage d'un évaporateur selon la revendication 1, **caractérisé en ce que** lesdits canaux ouverts par laser ont une profondeur comprise entre 10 et 50 micromètres.

3. Un procédé de montage d'un évaporateur selon l'une quelconque des revendications précédentes, **caractérisé en ce que** la pression à exercer sur ladite partie en métal du corps de l'évaporateur (11) est appliquée pendant 10 à 20 secondes.

4. Un procédé de montage de l'évaporateur selon l'une quelconque des revendications précédentes, **caractérisé en ce que** la pression à exercer sur ladite partie en métal du corps de l'évaporateur (11) est comprise entre 500 et 3000 Newtons.

5. Un procédé de montage d'un évaporateur selon l'une quelconque des revendications précédentes, **caractérisé en ce que** la valeur de la température prédéterminée à laquelle la partie en métal de l'évaporateur (11) doit être portée est comprise entre 200 et 240 degrés Celsius.

6. Un procédé de montage d'un évaporateur selon l'une quelconque des revendications précédentes, **caractérisé en ce que** le thermoformage (12) appliqué dans ladite zone de montage comporte au moins une structure de conduit d'air (15).

7. Un réfrigérateur fabriqué à l'aide du procédé de montage de l'évaporateur selon l'une quelconque des revendications précédentes.
